# FASCICULE DE BREVET EUROPEEN

(11) **EP 1 238 737 B1**
(45) Date de publication et mention de la délivrance du brevet: **27.10.2010**
(21) Numéro de dépôt: 02356009.7
(22) Date de dépôt: 21.01.2002
(51) Int. Cl.: B23G 1/16, B23B 31/08

(54) **Unité de taraudage**
Gewindeschneideinheit
Tapping unit

(30) Priorité: 30.01.2001 FR 0101534
(43) Date de publication de la demande: 11.09.2002
(73) Titulaire: PRONIC, 74970 Marignier (FR)
(72) Inventeur: Augis, Jean-Noël, 74300 Cluses (FR)
(74) Mandataire: Poncet, Jean-François

(56) Documents cités:
- DE-A- 19 729 263
- GB-A- 1 369 208
- GB-A- 1 391 176

## Description

La présente invention concerne les unités de taraudage destinées à être montées sur une machine d'usinage. L'invention concerne notamment les unités de taraudage pouvant être utilisées sur une machine d'usinage assurant un ou plusieurs usinages de pièces en continu.

Par exemple, une telle unité de taraudage peut être utilisée sur une presse de formage de pièces, pour réaliser un ou plusieurs taraudages sur la pièce.

On connaît déjà des taraudeuses pour réalisation de taraudages sur presse. Par exemple, le document EP 0 999 006 décrit une telle taraudeuse comprenant un carter destiné à être fixé au regard d'une pièce à tarauder sur une machine d'usinage telle qu'une presse. Le carter comprend un logement intérieur dans lequel est logé une patronne en forme de douille à alésage taraudé bloquée en rotation. La patronne reçoit dans son alésage un porte-taraud qui lui même comporte des moyens pour recevoir et retenir un taraud. Le porte-taraud comprend un tronçon fileté engagé fonctionnellement dans l'alésage taraudé de la patronne. Le porte-taraud comprend un tronçon proximal d'entraînement à section transversale polygonale qui coulisse dans un alésage à section transversale polygonale d'un arbre d'entraînement monté rotatif dans le carter. L'arbre d'entraînement est sollicité en rotation par une transmission mécanique actionnée par un moteur.

La transmission mécanique comprend un arbre flexible qui relie les éléments mobiles du carter à un moteur distant.

Le carter est monté sur le support de pièce de la machine avec interposition de moyens élastiques tels que des blocs de matière élastique. Les blocs de matière élastique doivent toutefois présenter une raideur suffisante pour assurer un positionnement correct du taraud en début d'usinage. Il en résulte que les possibilités de déplacement radial et axial du taraud sont réduites, et que les déplacements parasites de la pièce lors de l'usinage engendrent des efforts relativement importants sur le taraud en cours de taraudage, nuisant à la qualité du taraudage effectué, nuisant à la longévité des tarauds, et provoquant des risques de desserrage des porte-tarauds.

En outre, l'arbre flexible d'entraînement applique sur le carter une force ou un couple non négligeable, modifiant son positionnement et affectant ainsi la position du taraud en début d'usinage. Cela nécessite d'augmenter encore la raideur des blocs de matière élastique reliant le carter et le support de pièce de la machine, nuisant à la liberté de mouvement du taraud.

La tête de taraudage formée par le carter et les pièces qu'il contient présente une inertie relativement importante, qui réduit les capacités de déplacement rapide du taraud lors du taraudage par rapport à la pièce à usiner.

Ces inconvénients sont d'autant plus sensibles lors du taraudage des petits diamètres.

On connaît également du document DE 197 29 263 A une unité de taraudage dans laquelle sont prévus à la fois des moyens pour autoriser un léger déplacement radial limité du taraud dans le carter autour d'une position radiale moyenne, et des moyens pour autoriser un déplacement axial limité de recul du taraud vers l'intérieur du carter à l'encontre de moyens de rappel élastique depuis une position de référence. Pour cela, le taraud est monté dans une douille à pince, ladite douille étant montée avec un certain jeu radial dans un arbre de travail dont la portion centrale est couplée à une roue conique d'entraînement et dont la portion proximale est filetée pour s'engager dans l'alésage taraudé d'une patronne elle-même montée coulissante axialement dans le carter et repoussée vers l'avant par un ressort pour venir en butée contre un épaulement du carter.

En position normale de taraudage, la patronne est en appui contre l'épaulement du carter, de sorte que le taraud peut d'une part osciller radialement avec la douille, et peut reculer vers l'intérieur du carter à l'encontre de la poussée du ressort. Par contre, le taraud ne peut pas se déplacer vers l'extérieur du carter.

Ce dispositif est conçu pour faciliter l'engagement du taraud dans un avant-trou de la pièce à tarauder, et pour autoriser le recul du taraud si le trou n'existe pas ou est trop décalé.

Mais ce dispositif n'est pas prévu pour suivre les mouvements parasites des pièces à usiner lors des taraudages en grande série, et on constate encore une tendance à certains défauts des taraudages, à une longévité réduite des tarauds, et à des phénomènes de desserrage des porte-tarauds.

Le problème proposé par la présente invention est d'améliorer la qualité du taraudage réalisé par les unités de taraudage montées sur une machine d'usinage telle qu'une presse. L'invention résulte de l'observation selon laquelle des défauts de taraudage sont engendrés par les mouvements parasites de la pièce à usiner sur le support de pièce, mouvements qui induisent des efforts non négligeables entre la pièce à usiner et le taraud. Il se trouve que, dans les machines de production en grande série, les pièces à usiner sont plaquées sur le support de pièces par des moyens de tenue appropriés, mais que cette tenue n'est pas réalisée avec une pression constante et permanente, notamment en début de taraudage. Il en résulte des mouvements parasites dans le sens de l'éloignement de la pièce à l'écart du carter de l'unité de taraudage. Ces mouvements, bien que très limités en amplitude, sont inévitables et fréquents, et sont liés à la cinématique des outils de découpe. Il apparaît que ces mouvements parasites d'éloignement perturbent considérablement la longévité des tarauds, la qualité du taraudage, et l'efficacité du serrage des tarauds dans les porte-tarauds.

L'idée qui est à la base de l'invention est d'autoriser des mouvements limités d'avance du taraud hors du carter de la tête de taraudage, le carter étant fixé de manière rigide sur le support de la machine, de façon que le taraud puisse suivre sans contrainte les mouvements parasites fréquents des pièces à tarauder. De plus, les pièces en mouvement constituent un sous-ensemble de masse réduite à faible inertie, capable de suivre les mouvements parasites rapides de la pièce à usiner par rapport au support de pièce.

Ainsi, l'invention prévoit une unité de taraudage comprenant :
- un carter destiné à être fixé au regard d'une pièce à usiner sur un support d'une machine d'usinage telle qu'une presse, et ayant un logement intérieur,
- une patronne, comportant une douille à alésage taraudé, engagée axialement dans le logement intérieur du carter et retenue en rotation par des moyens de blocage,
- un porte-taraud, comportant des moyens pour recevoir et retenir un taraud, muni d'un tronçon fileté engagé fonctionnellement dans l'alésage taraudé de la patronne, et comportant un tronçon d'entraînement,
- un arbre d'entraînement, monté rotatif dans le carter, comportant un alésage recevant en coulissement longitudinal le tronçon d'entraînement du porte-taraud, et sollicité en rotation par une transmission mécanique actionnée par un moteur,
- des moyens pour autoriser un léger déplacement radial limité du taraud dans le carter autour d'une position radiale moyenne,
- des moyens pour autoriser un déplacement axial limité d'avance du taraud vers l'extérieur du carter à l'encontre de moyens de rappel élastiques depuis une position de référence.

Dans une réalisation pratique, les moyens pour autoriser le déplacement axial limité d'avance du taraud comprennent :
- un alésage axial de carter dans lequel la patronne coulisse longitudinalement entre la position de référence et une position proximale de recul,
- un épaulement postérieur distal dudit alésage axial de carter,
- un épaulement antérieur distal de la patronne, en regard de l'épaulement postérieur distal de l'alésage, avec une distance axiale appropriée entre lesdits épaulements lorsque la patronne est en position de référence,
- un ressort de rappel d'avance, de type ressort de compression, engagé dans l'alésage axial de carter entre l'épaulement antérieur distal de la patronne et l'épaulement postérieur distal de l'alésage, pour repousser la patronne axialement dans le sens du recul.

De préférence, l'unité comprend en outre des moyens élastiques de rappel en position radiale centrée du porte-taraud dans le carter.

Selon un mode de réalisation simplifié, les moyens pour autoriser le léger déplacement radial limité du taraud dans le carter comprennent :
- le fait que le tronçon d'entraînement est un tronçon proximal du porte-taraud,
- le fait que le taraud est maintenu fixement dans le porte-taraud,
- un léger jeu radial entre l'alésage à section transversale polygonale de l'arbre d'entraînement et le tronçon proximal d'entraînement du porte-taraud,
- un jeu radial approprié entre la patronne et l'alésage axial de carter qui la guide latéralement,
   de sorte que le porte-taraud, le taraud et la patronne forment un sous-ensemble autonome en déplacement dans le carter fixe, selon un mouvement de légère oscillation conique.

De préférence, afin d'augmenter encore les capacités d'absorption des mouvements parasites de la pièce à usiner, l'unité de taraudage selon l'invention comprend en outre des moyens pour autoriser un déplacement axial limité de recul du taraud vers l'intérieur du carter à l'encontre de moyens de rappel élastiques depuis la position de référence.

Dans un mode de réalisation pratique, les moyens pour autoriser le déplacement axial limité de recul du taraud comprennent :
- un épaulement postérieur proximal dudit alésage axial de carter,
- un épaulement postérieur proximal correspondant de la patronne,
- un ressort de rappel de recul, engagé dans le logement intérieur de carter entre l'épaulement postérieur proximal de la patronne et une portée frontale du carter, pour repousser la patronne axialement dans le sens de l'avance, la poussée du ressort de rappel de recul étant inhibée par l'épaulement postérieur proximal de l'alésage axial de carter lorsque la patronne est au niveau ou en aval de sa position de référence.

De préférence, on prévoit des moyens d'étanchéité disposés entre la patronne et le porte-taraud en sortie distale de l'alésage de patronne, pour s'opposer à la progression des fluides polluants vers les filets coopérants de l'alésage fileté de la patronne et du tronçon fileté du porte-taraud.

Selon un autre aspect, l'invention prévoit ainsi une presse de formage et d'usinage de pièces caractérisée en ce qu'elle comprend une unité de taraudage telle que définie ci-dessus, le carter de l'unité de taraudage étant fixé au porte-pièce de la presse avec le taraud orienté vers la pièce à usiner, de sorte que les libertés de mouvement radial et axial du taraud lui permettent de suivre les mouvements parasites de la pièce à usiner sur le porte-pièce pendant le taraudage.

D'autres objets, caractéristiques et avantages de la présente invention ressortiront de la description suivante de modes de réalisation particuliers, faite en relation avec les figures jointes, parmi lesquelles:
- la figure 1 est une vue schématique en perspective d'une unité de taraudage selon un mode de réalisation de la présente invention ;
- la figure 2 est une vue en perspective éclatée de la structure de tête de taraudage selon un mode de réalisation avantageux de la présente invention ;
- la figure 3 est une vue de côté en coupe longitudinale de la tête de taraudage de la figure 2 ;
- la figure 4 est une vue en perspective éclatée de l'ensemble intérieur mobile de la tête de taraudage des figures 2 et 3, montrant le taraud, le porte-taraud, la patronne ; et
- la figure 5 est une vue de côté en coupe longitudinale de l'ensemble mobile de la figure 4 à l'état assemblé.

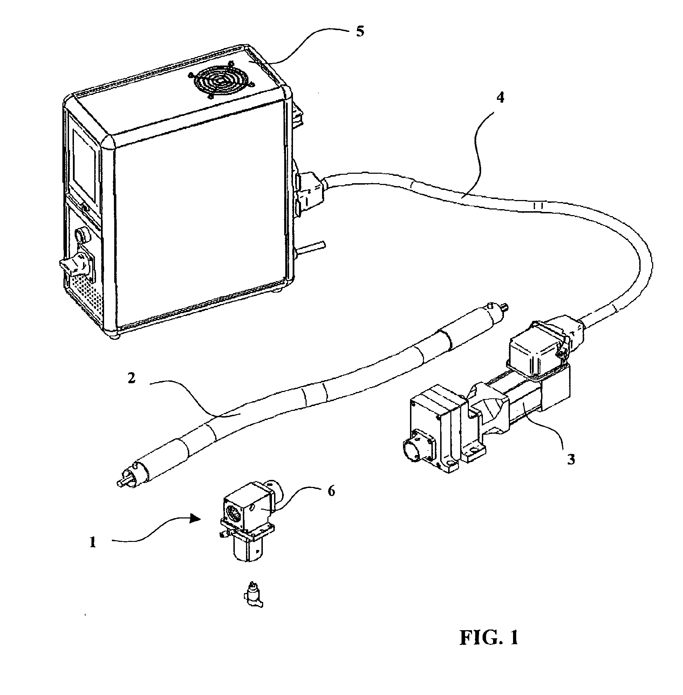

Dans la réalisation illustrée sur la figure 1, une unité de taraudage comprend de façon générale une tête de taraudage 1 reliée par un arbre flexible d'entraînement 2 à un moteur 3 lui-même alimenté en énergie électrique par un cordon 4 et une alimentation 5 incluse dans un coffret de pilotage.

La tête de taraudage 1 comporte, comme cela est généralement le cas, un renvoi d'angle à 90° à l'intérieur d'un carter 6 destiné à être fixé sur un support d'une machine d'usinage telle qu'une presse, au regard d'une pièce à tarauder.

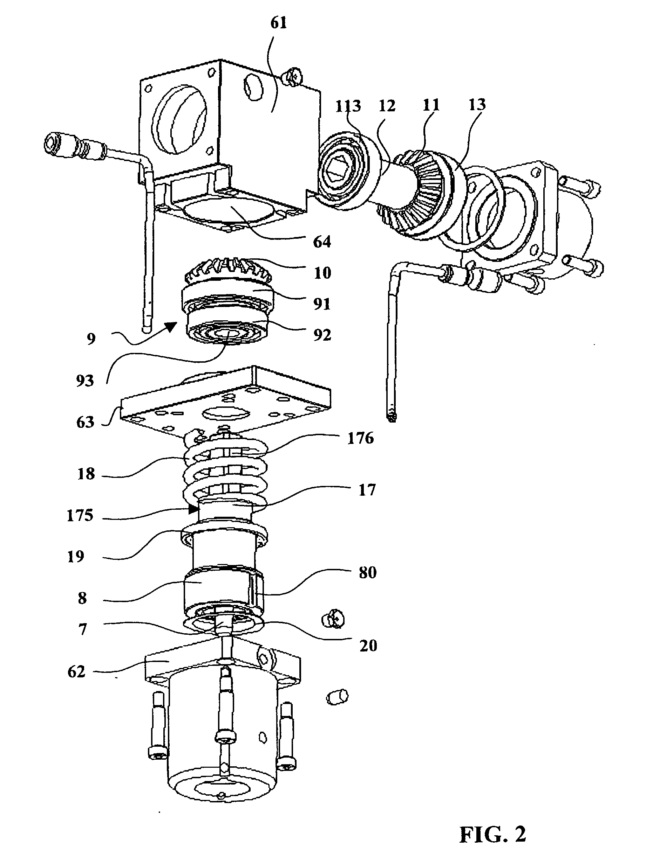

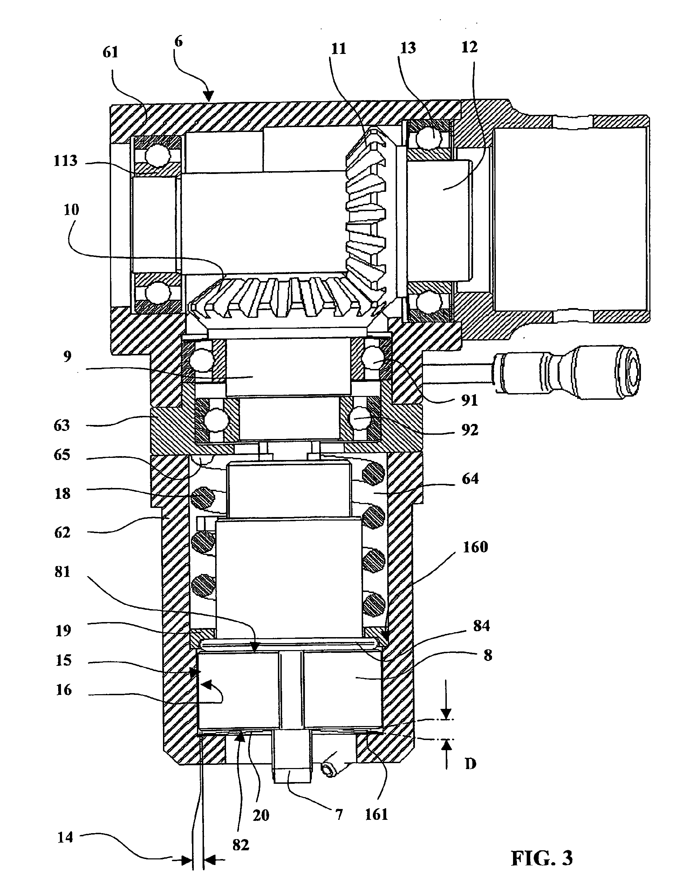

Les figures 2 et 3 illustrent la structure générale de la tête de taraudage selon un mode de réalisation de la présente invention. Dans ce mode de réalisation, le carter 6 est formé de l'assemblage d'une partie proximale de carter 61, d'une partie distale de carter 62 et d'une plaque intermédiaire de liaison 63.

Le carter 6 comporte un logement intérieur 64, conformé pour recevoir et retenir les pièces en mouvement pour le maintien et l'entraînement en rotation d'un taraud 7.

Le carter 6 contient une patronne 8, engagée axialement dans le logement intérieur 64 du carter 6 et bloquée en rotation par des moyens de blocage tels qu'une clavette engagée dans une gorge périphérique 80. Un arbre d'entraînement 9 est monté en rotation dans le carter 6. L'arbre d'entraînement 9 est sollicité en rotation par une transmission mécanique actionnée par un moteur. Dans la réalisation illustrée, l'arbre d'entraînement 9, mobile en rotation selon l'axe du taraud 7, porte un pignon conique mené 10 engrenant sur un pignon conique menant 11, lui-même monté sur un arbre moteur 12 tourillonnant dans le carter 6 en étant tenu dans un roulement à billes amont 13 et un roulement à billes aval 113. L'arbre moteur 12 peut être accouplé au moteur 3 (figure 1) par l'intermédiaire de l'arbre flexible d'entraînement 2.

L'arbre d'entraînement 9 (figure 3) est maintenu dans le carter 6 par deux roulements 91 et 92 qui le guident en rotation en s'opposant à son mouvement axial.

Comme on le voit sur la figure 3, la patronne 8 est montée avec un jeu radial 14 approprié entre sa surface périphérique 15 et l'alésage 16 de carter 6 qui la guide latéralement.

Simultanément, la patronne 8 est rappelée en position radiale centrée dans le carter 6 par un joint torique 84 en matière élastique, engagé radialement entre la surface cylindrique périphérique de la patronne 8 et une bague 19 montée dans le logement intérieur 64 du carter 6. Le joint torique 84 constitue des moyens élastiques de rappel en position radiale centrée du porte-taraud 17 dans le carter 6. On améliore ainsi la capacité du taraud 7 à s'engager dans un avant-trou de la pièce à tarauder, en début de taraudage, même si l'avant-trou est légèrement excentré, et quelle que soit la direction de cette excentration.

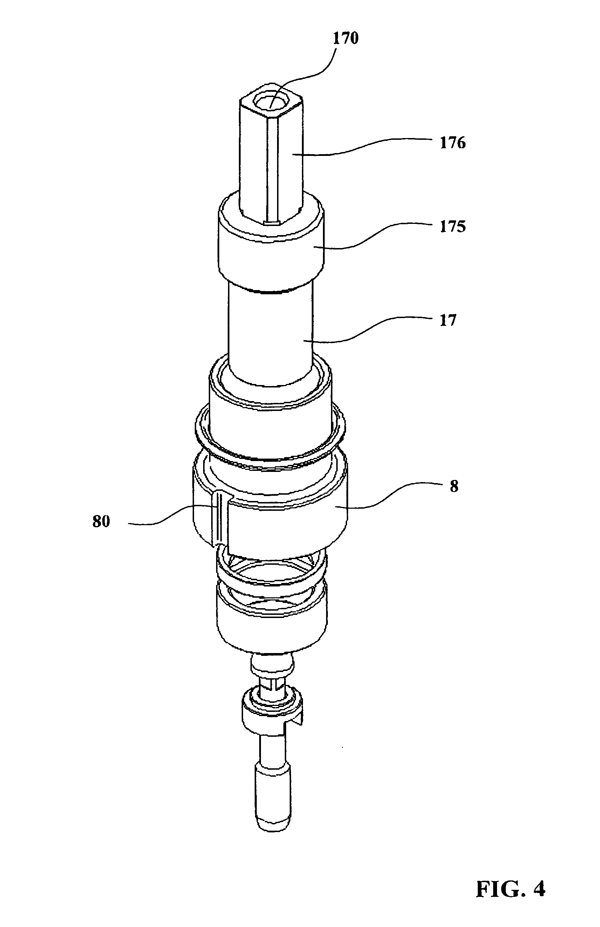

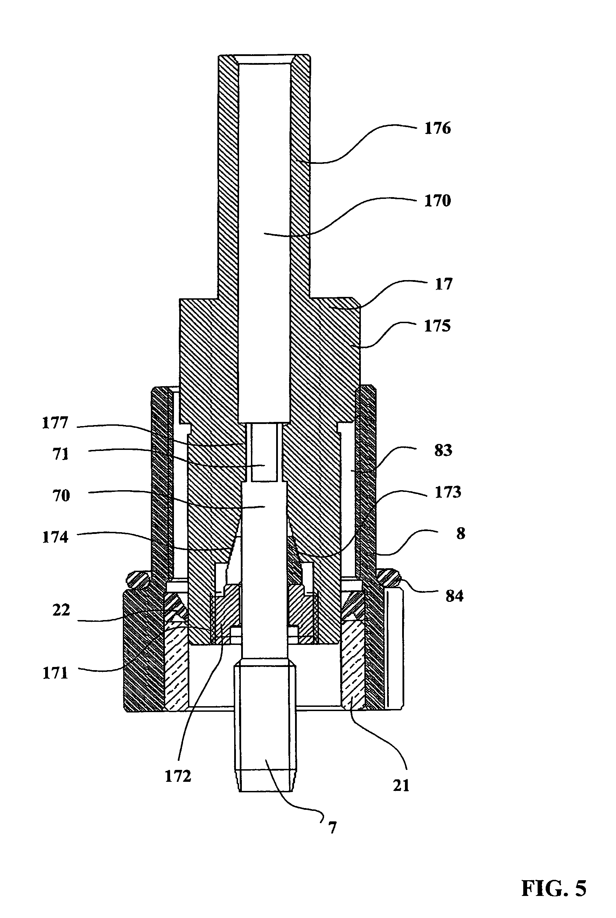

On se référera maintenant aux figures 4 et 5, qui illustrent plus en détail les pièces formant les éléments mobiles de la tête de taraudage. On retrouve la patronne 8, qui a la forme d'une douille à alésage taraudé 83. Un porte-taraud 17 comporte des moyens pour recevoir et retenir le taraud 7. Dans l'exemple illustré, le porte-taraud 17 comporte un alésage intérieur 170 conformé pour recevoir à coulissement la tige 70 du taraud 7. L'extrémité distale du porte-taraud 17 comporte un tronçon d'alésage intérieur taraudé 171 qui reçoit un écrou de serrage 172 lui-même venant porter contre une bague conique fendue de serrage 173 engagée dans une portion conique 174 du porte-taraud 17. Par serrage de l'écrou de serrage 172 dans le tronçon d'alésage intérieur taraudé 171, l'écrou de serrage 172 repousse la bague conique fendue de serrage 173 dans la portion conique 174, réduisant le diamètre de la bague conique fendue de serrage 173 qui vient ainsi serrer la tige 70 du taraud 7 pour le maintenir fixement dans le porte-taraud 17.

Pour parfaire l'accouplement en rotation du taraud 7 dans le porte-taraud 17, l'alésage intérieur 170 du porte-taraud 17 comporte un tronçon intermédiaire 177 à section transversale polygonale, par exemple à section carrée, pour recevoir le tronçon d'extrémité 71 de la tige 70 du taraud 7, le tronçon d'extrémité 71 étant lui-même à section polygonale correspondante pour accoupler en rotation le taraud 7 dans le porte-taraud 17.

Le porte-taraud 17 est muni d'un tronçon fileté 175 engagé fonctionnellement dans l'alésage taraudé 83 de la patronne 8, et comporte un tronçon proximal d'entraînement 176 à section transversale polygonale, par exemple à section carrée comme illustré sur la figure 4 ou sur la figure 2. En se référant à la figure 2, on voit que le tronçon proximal d'entraînement 176 du porte-taraud 17 vient s'engager à coulissement longitudinal dans un alésage à section transversale polygonale 93 correspondante de l'arbre d'entraînement 9, afin d'accoupler en rotation le porte-taraud 17 dans l'arbre d'entraînement 9.

En fonctionnement de taraudage, la patronne 8 est initialement en position de référence, le porte-taraud est en position initiale reculée comme illustré sur la figure 5. La rotation du moteur 3 provoque alors, par l'intermédiaire de l'arbre flexible d'entraînement 2 et des pignons coniques 10 et 11, la rotation de l'arbre d'entraînement 9 qui lui-même entraîne en rotation le porte-taraud 17. Lors de sa rotation, le porte-taraud 17 se déplace hélicoïdalement par vissage de son tronçon fileté 175 dans l'alésage taraudé 83 de la patronne 8, assurant un déplacement hélicoïdal du taraud 7.

Un léger jeu radial est prévu entre l'alésage à section transversale polygonale 93 de l'arbre d'entraînement 9 et le tronçon proximal d'entraînement 176 du porte-taraud 17. Il peut s'agir du jeu fonctionnel que l'on laisse habituellement entre deux pièces en coulissement, et qui est plus faible que le jeu radial 14 approprié entre la patronne 8 et l'alésage 16 de carter 6.

Par la combinaison de ce léger jeu radial avec le jeu radial 14 approprié entre la patronne 8 et l'alésage 16 du carter 6, on autorise une légère oscillation conique de l'ensemble formé par le porte-taraud 17, le taraud 7 et la patronne 8, autorisant ainsi un léger déplacement radial limité du taraud 7 dans le carter 6 autour d'une position radiale moyenne. Le caractère conique de l'oscillation de l'ensemble porte-taraud 17, taraud 7 et patronne 8, autour d'un centre proximal situé au niveau de l'arbre d'entraînement 9, augmente la capacité d'oscillation radiale du taraud 7 : l'oscillation radiale du taraud 7 est supérieure à la valeur du jeu radial 14 approprié.

Le porte-taraud 17, le taraud 7 et la patronne 8 forment ainsi un sous-ensemble autonome en déplacement dans le carter 6, et ce sous-ensemble tel qu'illustré sur la figure 5 peut avantageusement être un sous-ensemble interchangeable que l'on vient adapter dans le carter 6 et que l'on peut remplacer par un autre sous-ensemble, permettant de tarauder facilement des trous de diamètres différents.

En se référant à nouveau à la figure 3, on a illustré des moyens autorisant un déplacement axial limité de recul du taraud 7 vers l'intérieur du carter 6 à l'encontre de moyens de rappel élastiques depuis une position de référence. Dans la réalisation illustrée, on prévoit un alésage axial 16 de carter 6 dans lequel la patronne 8 coulisse longitudinalement entre une position de référence ou position de repos illustrée sur la figure 3 et une position proximale de recul dans laquelle la patronne 8 est reculée ou déplacée vers le haut sur la figure 3. L'alésage axial 16 de carter 6 comporte un épaulement postérieur proximal 160. La patronne 8 comporte un épaulement postérieur proximal 81 correspondant, sensiblement au même niveau axial que l'épaulement postérieur proximal 160 de l'alésage axial 16 de carter 6 lorsque la patronne est en position de référence. Un ressort de rappel de recul 18, par exemple de type ressort hélicoïdal de compression, est engagé autour de la patronne 8 dans le logement intérieur 64 de carter 6 entre l'épaulement postérieur proximal 81 de la patronne 8 et une portée frontale 65 du carter 6, pour repousser la patronne 8 axialement dans le sens de l'avance c'est-à-dire vers le bas sur la figure 3. La poussée du ressort de rappel de recul 18 est inhibée par l'épaulement postérieur proximal 160 de l'alésage axial 16 de carter 6 lorsque la patronne 8 est en position de référence ou au-delà vers l'aval. Cela permet à la fois de déterminer une position de référence axiale de la patronne 8, et un retour de la patronne 8 en position radiale centrée sous l'action du joint torique 84.

La bague de poussée 19 est engagée à coulissement dans le logement intérieur 64 du carter 6 et autour de la patronne 8, entre l'extrémité distale du ressort de rappel de recul 18 et les épaulements postérieurs 81 et 160 respectifs de la patronne 8 et de l'alésage axial 16 de carter 6. En position de référence, la bague de poussée 19 est en appui sur l'épaulement postérieur proximal 160 de l'alésage axial 16 de carter 6.

Lors d'une poussée axiale sur le taraud 7 par la pièce à usiner, dans le sens d'une rentrée du taraud 7 dans le carter 6, la patronne 8 peut reculer légèrement en comprimant le ressort de rappel de recul 18, évitant les efforts excessifs sur le taraud 7.

Sur cette même figure 3, on a également illustré un mode de réalisation des moyens autorisant un déplacement axial limité d'avance du taraud 7 vers l'extérieur du carter 6 à l'encontre de moyens de rappel élastique depuis la position de référence. Ces moyens comprennent un épaulement postérieur distal 161 de l'alésage axial 16 de carter 6, et un épaulement antérieur distal 82 de la patronne 8 qui est au regard de l'épaulement postérieur distal 161 de l'alésage. Une distance axiale appropriée D est prévue entre les épaulements 161 et 82 lorsque la patronne 8 est en position de référence. Un ressort de rappel d'avance 20, par exemple de type ressort de compression, est engagé autour de la patronne 8 dans l'alésage axial 16 de carter 6 entre l'épaulement antérieur distal 82 de la patronne 8 et l'épaulement postérieur distal 161 de l'alésage, pour repousser la patronne 8 axialement dans le sens du recul. Ainsi, dans le cas où la pièce à usiner subit un léger mouvement à l'écart du carter 6 pendant le taraudage, le taraud 7 retenu par le porte-taraud et la patronne 8 peut avancer légèrement pour suivre la pièce à usiner en comprimant le ressort de rappel d'avance 20. Cela peut se produire, par exemple, lorsque le taraudage commence avant que la pièce à usiner soit correctement plaquée sur le porte-pièce, ou avant qu'un dispositif de pressage de pièce n'entre en fonction.

Le ressort de rappel d'avance 20 peut par exemple être une rondelle élastique.

Des moyens d'étanchéité sont disposés entre la patronne 8 et le porte-taraud 17 en sortie distale de l'alésage de patronne, pour s'opposer à la progression des fluides polluants vers les filets coopérants de l'alésage taraudé 83 de patronne et du tronçon fileté 175 du porte-taraud 17.

Par exemple, dans le mode de réalisation illustré, les moyens d'étanchéité comprennent une bague 21 en bronze de guidage et d'étanchéité, solidaire de la patronne 8, surmontée d'un joint à lèvre 22 engagé entre l'alésage de patronne et la surface extérieure du porte-taraud 17.

Selon l'invention, le carter 6 est rigidement fixé au porte-pièce de la machine d'usinage telle qu'une presse, avec le taraud 7 orienté vers la pièce à usiner. Ainsi, les libertés de mouvement axial et radial du taraud 7 porté par le porte-taraud 17 et la patronne 8 lui permettent de suivre les mouvements parasites de la pièce à usiner sur le porte-pièce pendant le taraudage. Le taraud 7 se trouve essentiellement guidé par les filets qu'il réalise dans la pièce à usiner.

L'entraînement mécanique est avantageusement assuré, dans les modes de réalisation décrits, par une transmission mécanique comprenant l'arbre flexible d'entraînement 2 reliant fonctionnellement le moteur 3 distant aux organes mobiles 7, 8, 17 du carter 6.

La présente invention n'est pas limitée aux modes de réalisation qui ont été explicitement décrits, mais elle en inclut les diverses variantes et généralisations contenues dans le domaine des revendications ci-après.

## Revendications

1. Unité de taraudage, comprenant :
- un carter (6) destiné à être fixé au regard d'une pièce à usiner sur un support d'une machine d'usinage telle qu'une presse, et ayant un logement intérieur (64),
- une patronne (8), comportant une douille à alésage taraudé (83), engagée axialement dans le logement intérieur (64) du carter (6) et retenue en rotation par des moyens de blocage (80),
- un porte-taraud (17), comportant des moyens (170, 171, 172, 173, 174) pour recevoir et retenir un taraud (7), muni d'un tronçon fileté (175) engagé fonctionnellement dans l'alésage taraudé (83) de la patronne (8), et comportant un tronçon d'entraînement (176),
- un arbre d'entraînement (9), monté rotatif dans le carter (6), comportant un alésage (93) recevant en coulissement longitudinal le tronçon d'entraînement (176) du porte-taraud (17), et sollicité en rotation par une transmission mécanique (2) actionnée par un moteur (3),
- des moyens (14, 176, 93) pour autoriser un léger déplacement radial limité du taraud (7) dans le carter (6) autour d'une position radiale moyenne,
**caractérisée en ce qu'**elle comprend en outre des moyens pour autoriser un déplacement axial limité d'avance du taraud (7) vers l'extérieur du carter (6) à l'encontre de moyens de rappel élastiques (20) depuis une position de référence.

2. Unité de taraudage selon la revendication 1, **caractérisée en ce que** les moyens pour autoriser le déplacement axial limité d'avance du taraud (7) comprennent :
- un alésage axial (16) de carter (6) dans lequel la patronne (8) coulisse longitudinalement entre la position de référence et une position proximale de recul,
- un épaulement postérieur distal (161) dudit alésage axial (16) de carter (6),
- un épaulement antérieur distal (82) de la patronne (8), en regard de l'épaulement postérieur distal (161) de l'alésage (16), avec une distance axiale appropriée (D) entre lesdits épaulements (161, 82) lorsque la patronne (8) est en position de référence,
- un ressort de rappel d'avance (20), de type ressort de compression, engagé dans l'alésage axial (16) de carter (6) entre l'épaulement antérieur distal (82) de la patronne (8) et l'épaulement postérieur distal (161) de l'alésage (16), pour repousser la patronne (8) axialement dans le sens du recul.

3. Unité de taraudage selon l'une des revendications 1 ou 2, **caractérisée en ce qu'**elle comprend des moyens élastiques (84) de rappel en position radiale centrée du porte-taraud (17) dans le carter (6).

4. Unité de taraudage selon l'une quelconque des revendications 1 à 3, **caractérisée en ce que** les moyens pour autoriser le léger déplacement radial limité du taraud (7) dans le carter (6) comprennent :
- le fait que le tronçon d'entraînement (176) est un tronçon proximal du porte-taraud (17),
- le fait que le taraud (7) est maintenu fixement dans le porte-taraud (17),
- un léger jeu radial entre l'alésage à section transversale polygonale (93) de l'arbre d'entraînement (9) et le tronçon proximal d'entraînement (176) du porte-taraud (17),
- un jeu radial (14) approprié entre la patronne (8) et l'alésage axial (16) de carter (6) qui la guide latéralement,
de sorte que le porte-taraud (17), le taraud (7) et la patronne (8) forment un sous-ensemble autonome en déplacement dans le carter (6) fixe selon un mouvement de légère oscillation conique.

5. Unité de taraudage selon l'une quelconque des revendications 1 à 4, **caractérisée en ce qu'**elle comprend en outre des moyens (64, 18) pour autoriser un déplacement axial limité de recul du taraud (7) vers l'intérieur du carter (6) à l'encontre de moyens de rappel élastiques (18) depuis la position de référence.

6. Unité de taraudage selon la revendication 5, **caractérisée en ce que** les moyens pour autoriser le déplacement axial limité de recul du taraud (7) comprennent :
- un épaulement postérieur proximal (160) dudit alésage axial (16) de carter (6),
- un épaulement postérieur proximal (81) correspondant de la patronne (8),
- un ressort de rappel de recul (18), engagé dans le logement intérieur (64) de carter entre l'épaulement postérieur proximal (81) de la patronne (8) et une portée frontale (65) du carter (6), pour repousser la patronne (8) axialement dans le sens de l'avance, la poussée du ressort de rappel de recul (18) étant inhibée par l'épaulement postérieur proximal (160) de l'alésage axial (16) de carter (6) lorsque la patronne est au niveau ou en aval de sa position de référence.

7. Unité de taraudage selon la revendication 6, **caractérisée en ce qu'**une bague de poussée (19) est engagée à coulissement dans le logement intérieur (64) du carter (6) et autour de la patronne (8), entre l'extrémité distale du ressort de rappel de recul (18) et les épaulements postérieurs (81, 160) respectifs de la patronne (8) et de l'alésage axial (16) de carter (6).

8. Unité de taraudage selon l'une quelconque des revendications 1 à 7, **caractérisée en ce qu'**elle comprend des moyens d'étanchéité disposés entre la patronne (8) et le porte-taraud (17) en sortie distale de l'alésage de patronne, pour s'opposer à la progression des fluides polluants vers les filets coopérants de l'alésage taraudé (83) de la patronne (8) et du tronçon fileté (175) du porte-taraud (17).

9. Unité de taraudage selon l'une quelconque des revendications 1 à 8, **caractérisée en ce que** la transmission mécanique comprend un arbre flexible d'entraînement (2) reliant fonctionnellement un moteur (3) distant aux organes mobiles (7, 8, 17) du carter (6).

10. Presse de formage et d'usinage de pièces, **caractérisée en ce qu'**elle comprend une unité de taraudage selon l'une quelconque des revendications 1 à 9, le carter (6) de l'unité de taraudage étant fixé au porte-pièce de la presse avec le taraud (7) orienté vers la pièce à usiner, de sorte que les libertés de mouvement radial et axial du taraud (7) lui permettent de suivre les mouvements parasites de la pièce à usiner sur le porte-pièce pendant le taraudage.

## Claims

1. Tapping unit, including:
- a casing (6) adapted to be fixed facing a part to be machined on a support of a machine tool such as a press and having an interior housing (64),
- a pattern (8) including a bush with a tapped bore (83) inserted axially in the interior housing (64) of the casing (6) and prevented from rotating by immobilizing means (80),
- a tap-carrier (17) including means (170, 171, 172, 173, 174) for receiving and retaining a tap (7), having a threaded section (175) functionally engaged in the tapped bore (83) of the pattern (8), and having a drive section (176),
- a drive shaft (9), rotatably mounted in the casing (6), having a bore (93) receiving the drive section (176) of the tap-carrier (17), which is adapted to slide longitudinally in it, and driven in rotation by a mechanical transmission (2) driven by a motor (3),
- means (14, 176, 93) for allowing slight and limited radial movement of the tap (7) in the casing (6) about a mean radial position,
**characterized in that** it further includes means for allowing limited forward axial movement of the tap (7) toward the exterior of the casing (6) from a reference position and against the action of return spring means (20).

2. Tapping unit according to claim 1, **characterized in that** the means for allowing limited axial advance movement of the tap (7) include:
- an axial bore (16) in the casing (6) in which the pattern (8) can slide longitudinally between the reference position and a retracted proximal position,
- a posterior distal shoulder (161) in said axial bore (16) in the casing (6),
- an anterior distal shoulder (82) on the pattern (8), facing the posterior distal shoulder (161) in the bore (16), with an appropriate axial distance (D) between said shoulders (161, 82) when the pattern (8) is in a reference position,
- an advance compression return spring (20) inserted in the axial bore (16) in the casing (6) between the anterior distal shoulder (82) of the pattern (8) and the posterior distal shoulder (161) of the bore (16) in order to push the pattern (8) axially back in the retraction direction.

3. Tapping unit according to either claim 1 or claim 2, **characterized in that** it includes return spring means (84) for returning the tap-carrier (17) to a centered radial position in the casing (6).

4. Tapping unit according to any of claims 1 to 3, **characterized in that** the means allowing slight and limited radial displacement of the tap (7) in the casing (6) include:
- the fact that the drive section (176) is a proximal section of the tap-carrier (17),
- the fact that the tap (7) is held fixedly in the tap-carrier (17),
- a slight radial clearance between the polygonal cross section bore (93) in the drive shaft (9) and the proximal drive section (176) of the tap-carrier (17),
- an appropriate radial clearance (14) between the pattern (8) and the axial bore (16) in the casing (6) that guides it laterally,
so that the tap-carrier (17), the tap (7) and the pattern (8) form an autonomous subassembly able to move in the fixed casing (6) with a slight and conical oscillatory movement.

5. Tapping unit according to any of claims 1 to 4, **characterized in that** it further includes means (64, 18) for allowing limited axial retrograde movement of the tap (7) toward the interior of the casing (6) from the reference position and against the action of return spring means (18).

6. Tapping unit according to claim 5, **characterized in that** the means for allowing limited axial retrograde movement of the tap (7) include:
- a proximal posterior shoulder (160) on said axial bore (16) of the casing (6),
- a corresponding proximal posterior shoulder (81) on the pattern (8),
- a retraction return spring (18), inserted in the interior housing (64) of the casing between the proximal posterior shoulder (81) of the pattern (8) and a front bearing surface (65) of the casing (6), in order to retract the pattern (8) axially in the forward direction, the thrust of the retraction return spring (18) being inhibited by the proximal posterior shoulder (160) of the axial bore (16) in the casing (6) when the pattern is at or downstream of its reference position.

7. Tapping unit according to claim 6, **characterized in that** a thrust ring (19) is slidably engaged in the interior housing (64) of the casing (6) and around the pattern (8), between the distal end of the retraction return spring (18) and the respective posterior shoulders (81, 160) on the pattern (8) and in the axial bore (16) in the casing (6).

8. Tapping unit according to any of claims 1 to 7, **characterized in that** it includes sealing means disposed between the pattern (8) and the tap-carrier (17) at the distal outlet of the bore in the pattern, in order to oppose polluting fluids reaching the co-operating threads of the tapped bore (83) in the pattern (8) and the threaded section (175) of the tap-carrier (17).

9. Tapping unit according to any of claims 1 to 8, **characterized in that** the mechanical transmission includes a flexible drive shaft (2) functionally connecting a remote motor (3) to the mobile members (7, 8, 17) of the casing (6).

10. Press for forming and machining parts, **characterized in that** it includes a tapping unit according to any of claims 1 to 9, the casing (6) of the tapping unit being fixed to the part-carrier of the press with the tap (7) facing toward the part to be machined, so that the freedom of radial and axial movement of the tap (7) allows it to follow unwanted movements of the part to be machined on the part-carrier during tapping.

## Patentansprüche

1. Gewindeschneideinheit enthaltend:
- ein Gehäuse (6), das dazu bestimmt ist, in Bezug auf ein zu bearbeitendes Werkstück an einem Support einer Werkzeugmaschine, wie z.B. einer Presse, befestigt zu werden, und das ein inneres Lagerbett (64) hat,
- eine Hülse (8), die eine Buchse mit einer Gewindebohrung (83) enthält, die axial in das innere Lagerbett (64) des Gehäuses (6) eingreift und durch Blockiermittel (80) gegen ein Verdrehen gehalten ist,
- einen Gewindebohrerhalter (17), der Mittel (170, 171, 172, 173, 174) zur Aufnahme und zum Halten eines Gewindebohrers (7) aufweist, der an einem Gewindeteil (175) befestigt ist, das funktionell in die Gewindebohrung (83) der Hülse (8) eingreift und einen Antriebsteil (176) aufweist,
- eine Antriebswelle (9) die drehbar in dem Gehäuse (6) gelagert ist und eine Bohrung (93) aufweist, die in Längsverschiebung das Antriebsteil (176) des Gewindebohrerhalters (17) aufnimmt und durch eine mechanische Transmission (2), die von einem Motor (3) angetrieben ist, in Drehung versetzt wird,
- Mittel (14, 176, 93) zum Erlauben einer leichten begrenzten radialen Verschiebung des Gewindebohrers (7) in dem Gehäuse (6) um eine mittlere radiale Position,
**dadurch gekennzeichnet, daß** sie zusätzlich Mittel aufweist, um eine begrenzte axiale Vorschubverschiebung des Gewindebohrers (7) in Richtung zum Äußeren des Gehäuses (6) von einer Referenzposition aus gegen elastische Rückhaltemittel (20) zu ermöglichen.

2. Gewindeschneideinheit nach Anspruch 1, **dadurch gekennzeichnet, daß** die Mittel zum Erlauben der begrenzten axialen Vorschubverschiebung des Gewindebohrers (7) enthalten:
- eine axiale Bohrung (16) des Gehäuses (6) in der die Hülse (8) in Längsrichtung zwischen einer Referenzposition und einer proximalen Rücklaufposition gleitet,
- eine hintere distale Schulter (161) in der genannten axialen Bohrung (16) des Gehäuses (6),
- eine vordere distale Schulter (82) der Hülse (8), die zur hinteren distalen Schulter (161) der Bohrung (16) gewandt ist, mit einer geeigneten axialen Distanz (D) zwischen den genannten Schultern (161, 82), wenn die Hülse (8) in der Referenzposition ist,
- einer Rückhol-Vorschubfeder (20) des Typs einer. Druckfeder, die in die axiale Bohrung (16) des Gehäuses (6) zwischen die vordere distale Schulter (82) der Hülse (8) und die hintere distale Schulter (161) der Bohrung (16) eingesetzt ist, um die Hülse (8) axial im Sinne eines Rücklaufes zu beaufschlagen.

3. Gewindeschneideinheit nach einem der Ansprüche 1 oder 2, **dadurch gekennzeichnet, daß** sie elastische Rückholmittel (84) in radial zentrierter Position des Gewindebohrerhalters (17) in dem Gehäuse (6) aufweist.

4. Gewindeschneideinheit nach irgendeinem der Ansprüche 1 bis 3, **dadurch gekennzeichnet, daß** die Mittel zum Ermöglichen einer leichten radialen begrenzten Verschiebung des Gewindebohrers (7) in dem Gehäuse (6) enthalten:
- die Tatsache, daß das Antriebsteil (176) ein Teil nahe dem Gewindebohrerhalter (17) ist,
- die Tatsache, daß der Gewindebohrer (7) fest in dem Gewindebohrerhalter (17) gehalten ist,
- ein geringes radiales Spiel zwischen der Bohrung mit polygonalem Querschnitt (93) der Antriebswelle (9) und dem proximalen Antriebsteil (176) des Gewindebohrerhalters (17),
- ein geeignetes radiales Spiel (14) zwischen der Hülse (8) und der axialen Bohrung (16) des Gehäuses (6), die sie seitlich führt,
- derart, daß der Gewindebohrerhalter (17), der Gewindebohrer (7) und die Hülse (8) eine autonome Untereinheit bilden, die in dem festen Gehäuse (6) gemäß einer leichten konischen Schwingung verschieblich ist.

5. Gewindeschneideinheit nach irgendeinem der Ansprüche 1 bis 4, **dadurch gekennzeichnet, daß** sie zusätzlich Mittel (64, 18) enthält, um eine axiale begrenzte Rücklaufverschiebung des Gewindebohrers (7) in Richtung zum Inneren des Gehäuses (6) gegen die elastischen Rückholmittel (18) ausgehend von einer Referenzposition ermöglichen.

6. Gewindeschneideinheit nach Anspruch 5, **dadurch gekennzeichnet, daß** die Mittel zum Ermöglichen der axialen begrenzten Rücklaufverschiebung des Gewindebohrers (7) enthalten:
- eine hintere proximale Schulter (160) der genannten axialen Bohrung (16) des Gehäuses (6),
- eine vordere proximale Schulter (81) entsprechend der Hülse (8),
- eine Rückholfeder (18), die in dem inneren Lagerbett (64) des Gehäuses zwischen der hinteren proximalen Schulter (81) der Hülse (8) und einer vorderen Anlagefläche (65) des Gehäuses (6) eingesetzt ist, um die Hülse (8) axial in Richtung eines Vorschubes zurückzustoßen, wobei der Schub der Rückholfeder (18) durch die hintere proximale Schulter (160) der axialen Bohrung (16) des Gehäuses (6) unterbunden ist, wenn die Hülse auf dem Niveau oder stromabwärts ihrer Referenzposition ist.

7. Gewindeschneideinheit nach Anspruch 6, **dadurch gekennzeichnet, daß** ein Druckring (19) verschieblich in das innere Lagerbett (64) des Gehäuses (6) und rings um die Hülse (8) eingreift, zwischen dem distalen Ende der Rückholfeder (18) und den entsprechenden hinteren Schultern (81, 160) der Hülse (8) und der axialen Bohrung (16) des Gehäuses (6).

8. Gewindeschneideinheit nach irgendeinem der Ansprüche 1 bis 7, **dadurch gekennzeichnet, daß** sie Dichtungsmittel aufweist, die zwischen der Hülse (8) und dem Gewindebohrerhalter (17) am distalen Ausgang der Bohrung der Hülse aufweist, um sich einem Ausbreiten von verschmutzenden Fluiden in Richtung zu kooperierenden Gewindegängen der Gewindebohrung (83) der Hülse (8) und dem Gewindeabschnitt (175) des Gewindebohrerhalters (17) zu widersetzen.

9. Gewindeschneideinheit nach irgendeinem der Ansprüche 1 bis 8, **dadurch gekennzeichnet, daß** die mechanische Transmission eine flexible Antriebswelle (2) aufweist, die funktionell einen entfernt gelegenen Motor (3) mit beweglichen Organen (7, 8, 17) des Gehäuses (6) verbindet.

10. Presse zum Formen und Bearbeiten von Werkstücken, **dadurch gekennzeichnet, daß** sie eine Gewindeschneideinheit nach irgendeinem der Ansprüche 1 bis 9 aufweist, wobei das Gehäuse (6) der Gewindeschneideinheit an einem Werkstückhalter der Presse befestigt ist, wobei der Gewindebohrer (7) in Richtung zu dem zu bearbeitenden Werkstück ausgerichtet ist, derart, daß die radialen und axialen Freiheitsgrade der Bewegung des Gewindebohrers (7) ihm ermöglichen, parasitären Bewegungen des zu bearbeitenden Werkstückes auf dem Werkstückhalter während des Gewindeschneidens zu folgen.
